# EUROPEAN PATENT SPECIFICATION

(11) **EP 3 988 420 B1**
(45) Date of publication and mention of the grant of the patent: **06.11.2024**
(21) Application number: 20910194.8
(22) Date of filing: 15.05.2020
(51) Int. Cl.: B61F 5/50, B61F 19/00, B61D 17/02, B61F 1/08

(54) **SNOW-ACCUMULATION-PREVENTING AND FLOW GUIDE DEVICE FOR BOGIE, AND RAILWAY VEHICLE**
SCHNEEANSAMMLUNGSVERHINDERNDE UND STRÖMUNGSLEITVORRICHTUNG FÜR DREHGESTELL UND SCHIENENFAHRZEUG
DISPOSITIF DE PRÉVENTION DE L'ACCUMULATION DE NEIGE ET DE GUIDAGE DE L'ÉCOULEMENT POUR UN BOGIE, ET VÉHICULE FERROVIAIRE

(30) Priority: 02.01.2020 CN 202010001531
(43) Date of publication of application: 27.04.2022
(73) Proprietor: CRRC Qingdao Sifang Co., Ltd., Qingdao, Shandong 266111 (CN)
(72) Inventor: XUE, Yue, Qingdao, Shandong 266111 (CN); ZHOU, Yeming, Qingdao, Shandong 266111 (CN); MA, Lijun, Qingdao, Shandong 266111 (CN); ZHANG, Zhenxian, Qingdao, Shandong 266111 (CN); ZHANG, Huijie, Qingdao, Shandong 266111 (CN)
(74) Representative: Leihkauf, Steffen Falk
(86) International application number: PCT/CN2020/090628
(87) International publication number: WO 2021/135040

(56) References cited:
- CN-A- 105 539 484
- CN-A- 105 539 484
- CN-A- 108 482 412
- CN-A- 108 482 412
- CN-A- 109 050 551
- CN-A- 109 050 551
- CN-A- 111 055 866
- JP-A- 2006 117 218
- JP-A- 2006 117 218
- JP-A- 2009 056 942
- JP-A- 2009 056 942
- JP-A- 2018 203 146
- JP-A- 2018 203 146

## Description

### Cross-Reference to Related Present invention(s)

The invention claims priority to and the benefit of Chinese Patent Present invention No. 202010001531.8, filed in the China National Intellectual Property Administration (CNIPA) on 02 January 2020.

### Technical Field

The present invention relates to a snow-accumulation-preventing and flow guide device for a bogie, and a rail vehicle, which belong to the technical field of rail vehicle manufacturing.

### Background

When an urban rail transit train runs in a heavy snow weather in alpine regions, accumulated snow on the road will be rolled up due to the effect of flow disturbance in the region of a bogie, and accumulated on the bogie. Under the action of heating elements on the bogie, such as a motor, a gearbox and a disc brake, the accumulated snow will be melt into water and then ice will be formed, and after a reciprocating action, relatively large ice blocks will be finally formed on the bogie. The ice blocks change the dynamic characteristics of the bogie, deteriorate the curve negotiating capability of the urban rail vehicle, reduce the working stability of a braking system of the urban rail vehicle, and seriously threaten the running stability, safety and comfort of the urban rail transit train.

In patent document CN105539484A, a snow-accumulation-preventing device for a bogie region of a train is provided, the device including a first actuator and a second actuator which determine a motion sequence according to a running direction of the train; the first actuator and the second actuator are respectively mounted on a front end plate and a rear end plate of a train chassis, and a bogie is located between the first actuator and the second actuator; the first actuator includes an extendable-retractable first flow guide plate, the second actuator includes an extendable-retractable second flow guide plate, and the first flow guide plate and the second flow guide plate are both driven by cylinders to extend and open or retract and close. When the train is running, the first flow guide plate close to the advancing direction of the train is in an extended and open state, and the second flow guide plate away from the advancing direction of the train is in a retracted and closed state, such that the amount of accumulated snow entering the front end region is reduced as much as possible, and the tail end guides air to flow out as much as possible, so as to reduce the occurrence of snow accumulation.

In the solution, the first flow guide plate and the second flow guide plate are respectively mounted on the front end plate and the rear end plate of the bogie region, the two flow guide plates are respectively provided at the bottoms of the two end plates, i.e., the front end plate and the rear end plate, and are both of cavity-type structures made of rubber capsules; mounting frames at one side of each cavity-type structure are mounted, in a fitting manner, on each of the front end plate and the rear end plate structures at the bottom of the train, and an end face on the other side thereof is connected to the cylinders, and the mounting frames are connected to the end faces by means of wrinkled extending-retracting portions, so as to achieve extending and retracting of the flow guide plates.

In this solution, the flow guide plates have wrinkled structures as a whole, and thus even if in an extended state, the lower surface (namely, a surface through which an airflow passes) of each flow guide plate still has wrinkles, and thus the flow guide plate cannot be completely extended, affecting flowing of airflow to a certain degree, and increasing the driving resistance, and snow is easily accumulated at the wrinkles, not facilitating complete retracting and closing. In addition, the flow guide plate away from the driving direction of the train is in a fully retracted and closed state, and abuts against the end plate. At this time, the gaps between the bogie and the end plates are in a fully open state, and there is a possibility that accumulated snow enters the upper part of the bogie. In addition, for rail vehicles having no front and rear end plate structures, the flow guide plates cannot completely close the gaps between the flow guide plates and the bogie, and cannot serve to block accumulated snow from entering the bogie region.

Other devices for preventing snow accumulation are known from CN108482412A and JP2006117218A. J

### Summary

The main technical problems to be solved in some embodiments of the present invention are to provide a snow-accumulation-preventing and flow guide device for a bogie which has better flow guide and snow accumulation preventing effects, and can ensure stable and reliable working, and to provide a bogie and a rail vehicle each of which is mounted with the snow-accumulation-preventing and flow guide device.

To achieve the described objects, the technical solution of some embodiments of the present invention is:
a snow-accumulation-preventing and flow guide device for a bogie, including a driving mechanism, and a first flow guide plate, a second flow guide plate and a third flow guide plate which are sequentially connected in a length direction of a vehicle body; two sides of the first flow guide plate, of the second flow guide plate and of the third flow guide plate are connected by means of extending-retracting portions, a top sealing plate is mounted on tops of the first flow guide plate and the third flow guide plate, the first flow guide plate, the second flow guide plate, the third flow guide plate, the extending-retracting portions at two sides and the top sealing plate together enclose a sealed cavity, top ends of the first flow guide plate and the third flow guide plate are configured to be rotatable around fixed points, the fixed points are provided on the top sealing plate or the vehicle body, a bottom end of the first flow guide plate is rotatably connected to the second flow guide plate, the second flow guide plate and the third flow guide plate can be connected to each other in a telescopic and slidable manner, and the driving mechanism drives the first flow guide plate and the second flow guide plate and a third flow guide plate to extend and open in a rail direction or retract and close in a direction of the vehicle body.

Further, the flow guide device is integrally mounted on a vehicle body chassis.

Further, a bottom end of the first flow guide plate is obliquely provided in a direction close to the bogie.

Further, in an extended and open state, an included angle α between the first flow guide plate and a horizontal plane ranges from 30° to 80°.

Further, in a retracted and closed state, an included angle β between the first flow guide plate and the horizontal plane is less than or equal to 50°.

Further, the second flow guide plate and the third flow guide plate are two parallel flat plates, and the second flow guide plate and the third flow guide plate are connected by means of multiple sliding pairs.

Further, when the first flow guide plate is in the extended and open state, the height from the lowest point of the first flow guide plate to a rail surface is 1/3 to 2/3 of the height of wheels.

Further, the fixed point at the top end of the third flow guide plate is provided at a position close to the bogie.

Further, the driving mechanism is a cylinder-driving mechanism, a front end portion of the cylinder-driving mechanism is fixedly connected to the first flow guide plate, and the cylinder-driving mechanism drives the first flow guide plate to rotate upward or downward, so as to achieve extension and opening or retraction and closing; or the driving mechanism is an inflation mechanism, and the inflation mechanism inflates or deflates the cavity, so as to achieve extension and opening or retraction and closing.

Another technical solution of some embodiments of the present invention is:
a rail vehicle, mounted with a plurality of bogies; the flow guide devices as described above are mounted at a vehicle body chassis on a front end and a rear end of each bogie, two flow guide devices are mounted symmetrically relative to a central axis of the bogie, the two flow guide devices are configured such that when the flow guide device mounted at the front part in the running direction of the vehicle is in an extended and open state, the flow guide device away from the running direction of the vehicle is in a retracted and closed state.

In summary, compared with the prior art, the snow-accumulation-preventing and flow guide device for a bogie and the rail vehicle provided in some embodiments of the present invention have the following advantages:
(1) In some embodiments of the present invention, flow guide devices are provided at a front end and a rear end of a bogie, and the flow guide devices are controlled to be automatically extended or retracted along with the change of the running direction of a train, so that the rail vehicle can achieve the effects of flow guide and snow accumulation preventing during bidirectional running.
(2) In some embodiments of the present invention, a front-guiding rear-dispersing method is used to reduce snow accumulation, that is, the flow guide device at a front end extends to guide a high-speed airflow to move downward so as to avoid the occurrence of snow accumulation in the bogie of the train during running, and to ensure that the dynamic performance of the bogie will not be deteriorated due to the snow accumulation; and the flow guide device at a rear end is retracted to facilitate passing of the airflow, so as to reduce the backflow at the tail end of the region of the bogie, and reduce snow accumulation and ice formation on the bogie to a greater extent.
(3) In some embodiments of the present invention, flow guide plate structures are used, and the surfaces through which the airflow flows are all smooth surfaces, and thus the flow guide plates, while guiding airflow, also facilitate more smooth flowing of the airflow through the surfaces of the flow guide plates, further reducing the running resistance, and also facilitating prevention of accumulation of ice and snow, and facilitating falling off of ice and snow from the surfaces of the flow guide plates.
(4) In some embodiments of the present invention, the flow guide devices are completely sealed structures, which can effectively prevent accumulated snow from entering the cavities, thereby ensuring that the flow guide devices run stably and reliably.
(5) In some embodiments of the present invention, while guiding a flow, the flow guide devices can also effectively block the gaps between the flow guide devices and the bogie, and can effectively block the upper region of the bogie whether in an extended and open state or in a retracted and closed state, thereby further preventing the accumulated snow from entering the upper part of the bogie.

### Brief Description of the Drawings

Fig. 1 is a schematic view in which flow guide devices are mounted on a rail vehicle in some embodiments of the present invention;
Fig. 2 is a schematic view of a mounting structure of flow guide devices on a bogie in some embodiments of the present invention;
Fig. 3 is a working principle diagram of flow guide devices when a vehicle travels to the left in some embodiments of the present invention;
Fig. 4 is a structural schematic view when a flow guide device is in an extended and open state (with a top sealing plate removed) in some embodiments of the present invention;
Fig. 5 is a structural schematic diagram when a flow guide device in a retracted and closed state (with a top sealing plate removed) in some embodiments of the present invention;
Fig. 6 is a comparison diagram of accumulation of snow particles on the surface of a first bogie in some embodiments of the present invention; and
Fig. 7 is a comparison diagram of accumulation of snow particles on the surface of a second bogie in some embodiments of the present invention.

The described accompanying drawings include the following reference signs:
1. vehicle body chassis; 2. flow guide device; 3. bogie; 4. wheel; 5. first flow guide plate; 6. second flow guide plate; 7. third flow guide plate; 8. extending-retracting portion; 9. cavity; 10. sliding groove; 11. cylinder; 12. air storage tank; 13. solenoid valve; 14. pin shaft; 15. pin shaft; 16. pin shaft; 17. pin shaft; 18: connecting base; 19. mounting base; 20. reinforcing rib frame; 21. top sealing plate.

### Detailed Description of the Embodiments

Hereinafter, some embodiments of the present invention are further described in detail with reference to the accompanying drawings and specific embodiments.

### Embodiment I:

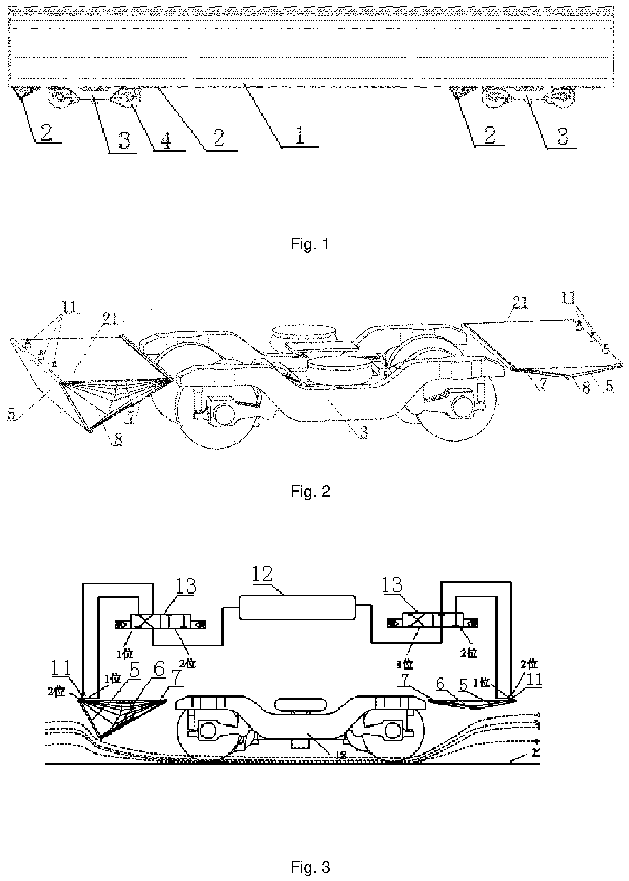

As shown in figs. 1-3, some embodiments of the present invention provide a snow-accumulation-preventing and flow guide device for a bogie, which is mounted in a region where a bogie 3 of a rail vehicle is located. In the present embodiment, the flow guide device is directly integrally mounted on a vehicle body chassis 1. Two group of flow guide devices 2 are respectively mounted at a front end and a rear end of the bogie 3. The front and rear two flow guide devices 2 have the same structure, and when being mounted, are symmetrically mounted relative to a central axis of the bogie 3. The two flow guide devices 2 determine an action sequence according to a running direction of the vehicle, so as to achieve the effects of flow guide and snow accumulation preventing during bidirectional running of the rail vehicle. The cooperation relationship between the front and rear flow guide devices 2 is that when the vehicle moves forward, the flow guide device 2 located at the front end in the running direction extends toward the direction of a rail surface so as to be in an extended and open state, and at the same time, the flow guide device 2 away from the running direction of the vehicle gets close to the vehicle body chassis 1 so as to be in a retracted and closed state.

Each flow guide device 2 includes a first flow guide plate 5, a second flow guide plate 6 and a third flow guide plate 7 which are sequentially connected in the length direction of the vehicle body. The first flow guide plate 5 is mounted on the side away from the bogie 3, and the second flow guide plate 6 and the third flow guide plate 7 are mounted on the side facing the bogie 3. In the flow guide device mounted at the front end in the running direction of the vehicle, the first flow guide plate 5 is located at one side of a windward surface (namely, a plane functioning to guide an airflow), and the second flow guide plate 6 and the third flow guide plate 7 are located at one side of a leeward surface. The whole length of the first flow guide plate 5, of the second flow guide plate 6 and of the third flow guide plate 7 are all provided along the transverse width of the vehicle body. In order to achieve the optimal blocking effect, the lengths of the first flow guide plate 5, the second flow guide plate 6 and the third flow guide plate 7 in the transverse direction of the vehicle body match the width of the bogie 3, and the lengths of the flow guide plates are at least greater than or equal to the wheel distance between two wheels 4 on the bogie 3, thereby ensuring to reduce the possibility of snow and sand entering the bogie 3 to the greatest extent.

In this embodiment, two sides of the first flow guide plate 5, of the second flow guide plate 6, and of the third flow guide plate 7 are respectively connected by means of extending-retracting portions 8, and a top sealing plate 21 is further mounted on top ends of the first flow guide plate 5 and the third flow guide plate 7. The first flow guide plate 5, the second flow guide plate 6, the third flow guide plate 7, the extending-retracting portions 8 at two sides and the top sealing plate 21 together enclose a sealed cavity 9, the cavity 9 is substantially in the shape of a triangular prism, thereby effectively preventing snowflakes from being suctioned into the interior of the cavity 9 when the vehicle moves, ensuring stable and reliable operation of the flow guide device. In order to further improve the sealing performance of the cavity 9, sealed connection structures may be further mounted between the first flow guide plate 5, the third flow guide plate 7, the extending-retracting portions 8 at two sides and the top sealing plate 21, so that the cavity forms a completely sealed structure.

In this embodiment, each of the extending-retracting portions 8 is of a wrinkled structure made of a soft material, so as to facilitate the extension and retraction of the three flow guide plates. Preferably, the extending-retracting portions 8 are composed of a rubber material or a fiber material which is high cold-resistant, impact-resistant, light-weight and highly elastic, which can ensure that the flow guide device reaches a predetermined angle when the extending-retracting portion is extended and that the flow guide device can be retracted to a predetermined position when the extending-retracting portion is retracted.

The flow guide device further includes a driving mechanism, and the driving mechanism drives the flow guide device to automatically extend and retract according to a change of the running direction of the vehicle, i.e. switching between two states of extending and opening or retracting and closing. The flow guide device being in an extended and opened state specifically means that the driving mechanism drives the flow guide device to rotate in the direction of the rail surface, so that the distance between the lowest point of the flow guide device and the rail surface is reduced; and the flow guide device being in a retracted and closed state specifically means that the driving mechanism drives the whole flow guide device to rotate and close upward, so that the whole flow guide device gets close to the vehicle body chassis 1 and closely abuts against the bottom of the vehicle body.

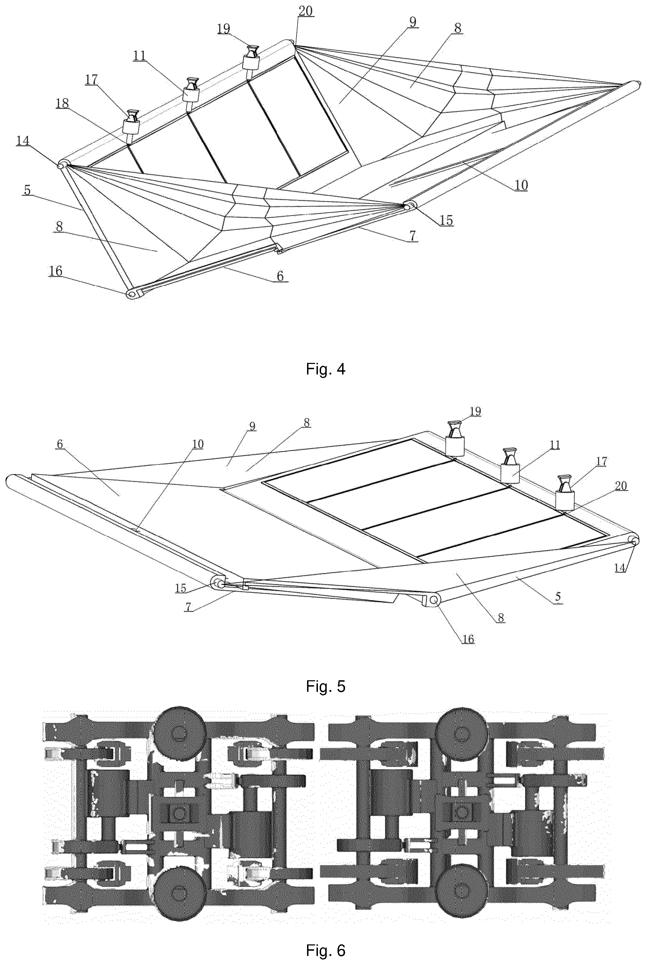

The first flow guide plate 5 and the third flow guide plate 7 are configured as structures capable of rotating around fixed points, the fixed points can be provided on the vehicle body chassis 1, and can also be provided on the top sealing plate 21, and then the top sealing plate 21 is fixed on the vehicle body chassis 1. As shown in figs. 4 and 5, in this embodiment, the top end of the first flow guide plate 5 is rotatably connected to the vehicle body chassis 1 by a pin 14, the top end of the third flow guide plate 7 is rotatably connected to the vehicle body chassis 1 by a pin 15, and the top sealing plate 21 is fixedly connected to the fixed points on the vehicle body chassis 1. The bottom end of the first flow guide plate 5 is rotatably connected to one end of the second flow guide plate 6 by a pin 16, the second flow guide plate 6 and the third flow guide plate 7 are two parallel plates, and the second flow guide plate 6 and the third flow guide plate 7 can be unfolded or overlapped relative to each other, and the two are connected by means of a telescopic sliding mechanism. The top ends of the first flow guide plate 5 and the third flow guide plate 7 are mounted on corresponding crossbeams (not shown in the figures) of the vehicle body chassis.

The telescopic sliding mechanism includes multiple sliding pairs provided between the second flow guide plate 6 and the third flow guide plate 7. As shown in fig. 4, a plurality of sliding grooves 10 are provided on the upper surface of the third flow guide plate 7, the plurality of sliding grooves 10 are provided in parallel, and three sliding grooves 10 can be provided and are respectively provided at two sides and the middle of the third flow guide plate 7, so as to ensure that the extension and retraction are stable and do not deflect. Corresponding to the three sliding grooves 10, three sliding blocks (not shown in the figures) are provided on the lower surface of the second flow guide plate 6, and the sliding blocks slide inside the sliding grooves. When the flow guide device needs to be extended and opened, the second flow guide plate 6 and the third flow guide plate 7 slide in a direction facing away from each other, and the second flow guide plate 6 and the third flow guide plate 7 are in a state of extending relative to each other as shown in fig. 4; and when the flow guide device needs to be retracted and closed, the second flow guide plate 6 and the third flow guide plate 7 slide in a direction facing each other, and the second flow guide plate 6 and the third flow guide plate 7 are in a mutually overlapping state as shown in fig. 5.

As shown in figs. 3-5, the driving mechanisms are cylinder-type driving mechanisms, and include cylinders 11, an air storage tank 12 and solenoid valves 13. In this embodiment, the cylinders 11 are double-acting cylinders, the air storage tank 12 is in communication with the cylinders 11, and double-acting solenoid valves 13 are mounted on air paths between the cylinders 11 and the air storage tank 12, so as to adapt to the movements of the vehicle in a forward direction and a backward direction. Driving mechanisms of two flow guide devices mounted on one bogie 3 share one air storage tank 12.

The cylinders 11 are integrally mounted inside the cavity 9, the tops of the cylinders 11 are mounted on the top sealing plate 21, and the front end parts of cylinder rods are fixedly connected to the first flow guide plate 5; or the cylinders 11 are mounted above the top sealing plate 21, and the cylinder rods thereof pass through the top sealing plate 21 and are fixedly connected to the first flow guide plate 5. The cylinders 11 are used to drive the first flow guide plate 5 to move, so as to extend and open or retract and close the flow guide device. In this embodiment, the first flow guide plate 5 is mounted with a reinforcing rib frame 20. One end of each of the cylinders 11 is rotatably connected to the vehicle body chassis 1 by means of a mounting base 19 and a pin shaft 17, the front end part of the cylinder rod of each cylinder 11 is fixedly connected to the reinforcing rib frame 20 by a connecting base 18, and in this way it can be better ensured that an airflow guide surface of the first flow guide plate 5 is not deformed under the action of the driving mechanism, and the other surface can be deformed rapidly, so as to achieve extension and opening or retraction and closing. In order to ensure a smooth movement of the first flow guide plate 5 as a whole, at least three cylinders 11 are mounted on the first flow guide plate 5. When the driving mechanism drives the first flow guide plate 5 to move in the direction of the rail surface, the extension and opening of the flow guide device is achieved; and when the driving mechanism drives the first flow guide plate 5 to move in the direction of the vehicle body, the retraction and closing of the flow guide device is achieved.

As shown in fig. 3, the top end of the first flow guide plate 5 is fixedly connected to the vehicle body chassis 1, and the bottom end thereof is obliquely provided in a direction close to the bogie 3. In an extended and open state of the first flow guide plate 5, an included angle α between the outer surface of the first flow guide plate and a horizontal plane ranges from 30° to 80°, preferably 50° to 70°, and the optimum value is selected to be 60°, and this inclined plane is used to guide air at the bottom of the vehicle body to deviate toward the rail surface. In a retracted and closed state of the first flow guide plate 5, an included angle β between the first flow guide plate and the horizontal plane is less than or equal to 50°, preferably less than or equal to 20°, and the optimal value is selected to be 5°, so that the flow guide device is as close as possible to the vehicle body chassis 1, and the inclined plane formed by the first flow guide plate 5 in a retracted and closed state can guide air entering the rear region of the bogie 3 to flow out to the rear of the bogie 3. According to a large number of experiments or simulation calculations, preferably, when the first flow guide plate 5 is in an extended and open state, the height from the lowest point of the first flow guide plate 5 to the rail surface is 1/3 to 2/3, preferably 1/3 to 1/2 of the height of wheels. The snow-accumulation-preventing device of the present embodiment can guide air at the bottom of an urban rail train in a more targeted manner. On the one hand, in the front end region of the bogie, the amount of accumulated snow entering the region where the bogie 3 is located is reduced as much as possible; and on the other hand, at the tail end of the region where the bogie 3 is located, air is guided out as much as possible, so as to prevent airflow at the rear of the region where the bogie 3 is located from flowing back to the region where the bogie 3 is located, reducing the occurrence of snow accumulation. Furthermore, as the first flow guide plate 5, the second flow guide plate 6 and the third flow guide plate 7 are all flat plate structures, when the vehicle runs, surfaces through which airflow flows are all smooth surfaces, so that the flow guide plates, while guiding airflow, also facilitate the airflow to flow more smoothly through the surfaces of the flow guide plates, thereby further reducing the running resistance, and also facilitating prevention of accumulation of ice and snow, and facilitating the falling off of ice and snow from the surfaces of the flow guide plates. In order to increase the structural strength and rigidity of the flow guide plates, a plurality of concave ribs (not shown in the figures) may also be provided on the flow guide plates, the concave ribs extend along the length direction of the vehicle body, and of course, structures such as reinforcing ribs may also be provided only on the inner surfaces of the flow guide plates.

In the present embodiment, a connection point between the top end of the third flow guide plate 7 and the vehicle body chassis 1 is close to the position of the bogie 3, so that the upper region of the bogie 3 can be effectively blocked whether in an extended and open state or in a retracted and closed state, thereby preventing accumulated snow from entering the upper region of the bogie 3.

As shown in fig. 3, when the vehicle is running to the left, high-pressure air in the air storage tank 12 flows through a 1-position end of the double-acting solenoid valve 13 at the right side, and inflates 1-position ends of double-acting cylinders 11 at the rear end (the right side) of the region where the bogie 3 is located, which drives the three double-acting cylinders 11 at the rear end to retract and to jointly push the first flow guide plate 5 to rotate in the direction of the vehicle body chassis 1; and during the rotation, the second flow guide plate 6 and the third flow guide plate 7 overlap each other under the constraint of the telescopic sliding mechanism, and the flow guide device is retracted and closed and in a retracted and closed state, and is closely attached to the vehicle body chassis 1. Meanwhile, the high-pressure air in the air storage tank 12 flows through a 2-position end of the double-acting solenoid valve 13 at the left side, and inflates 2-position ends of double-acting cylinders 11 at the front end (left side) of the region where the bogie 3 is located, and the three double-acting cylinders 11 at the front end of the region where the bogie 3 is located are extended, and jointly push the first flow guide plate 5 to rotate in the direction of the rail surface; and during the rotation, the second flow guide plate 6 and the third flow guide plate 7 extend from each other under the constraint of the telescopic sliding mechanism, reducing the distance between the first flow guide plate 5 and the front end of the rail surface, and thus the flow guide device is in an extended and open state, and the inclined plane formed by extending and opening of the first flow guide plate 5 in the flow guide device at the left side forces the airflow at the front bottom part to deviate toward the rail surface, preventing the airflow from entering the region where the bogie 3 is located. As the airflow entrains snowflakes, the amount of snow entering the region where the bogie 3 is located is also reduced. Then, the first flow guide plate 5 of the flow guide device at the right side is in a retracted and closed state, and the inclined plane formed thereby enables the airflow to still move rearward when the bottom airflow flushes the first flow guide plate 5 at the rear part, thereby preventing the airflow from flowing back to the region where the bogie 3 is located. As the airflow entrains snowflakes, the amount of snowflakes entering, from the rear part, the region where the bogie 3 is located is also reduced. By means of combined action of the first flow guide plates 5 at the a front end and a rear end of the bogie, snow accumulation in the region where the bogie 3 is located is greatly reduced, and the operation safety of the train can be ensured to the greatest extent without reducing the running speed.

When the train travels to the right, the double-acting solenoid valve 13 at the right side is switched to the 2-position end, and the double-acting solenoid valve 13 at the left side is switched to the 1-position end, so that the double-acting cylinders 11 on the two sides of the bogie 3 have opposite actions; however, the working principle is completely the same as that when the train travels to the left, so that the occurrence of snow accumulation can also be reduced. When the train enters a garage or stops for a long time, the first flow guide plates 5 on the sides of the bogie 3 are both retracted under the action of the respective double-acting cylinders 11, so that the first flow guide plates can return to a non-operating state.

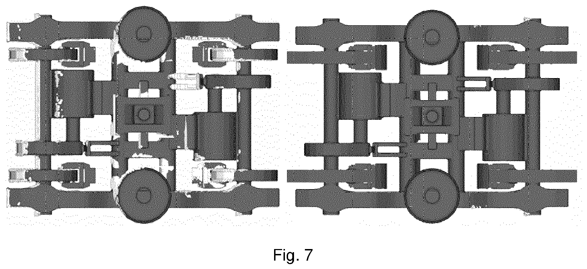

Figs. 6 and 7 show numerical simulation results of the flow guide devices.

A model is solved by using a computational fluid dynamics (CFD) method, and the following comparison result between an optimization model to which the flow guide devices are added and an original model without the flow guide devices is obtained:

**Table 1 Accumulation amounts (number) of snow particles of whole bogies in combined solution I and original working condition**

| Solution | First bogie | Second bogie | Total |
|---|---|---|---|
| Optimization solution | 26531 | 9075 | 35606 |
| Original working condition | 406947 | 94823 | 501770 |

The accumulation amount of snow particles in the optimization solution is far less than the accumulation amount of snow particles in the original working condition, in which the accumulation amount of snow particles in a first bogie in the optimization solution only accounts for 6.52% of that in the original working condition, the accumulation amount of snow particles in a second bogie only accounts for 9.57% of that in the original working condition, and the number of accumulated particles in the optimization solution is 7.10% of that in the original working condition. Therefore, the snow accumulation situation in the region where a bogie 3 of an urban rail train is located in the optimization solution is far better than that in the original working condition, and the optimization is effective.

**Table 2 Accumulation amounts (number) of snow particles of brake devices in combined solution I and original working condition**

| Solution | First bogie | Second bogie | Total |
|---|---|---|---|
| Optimization solution | 6463 | 1686 | 8149 |
| Original working condition | 73725 | 7359 | 81084 |

Regardless of the accumulation amount in the first bogie, the accumulation amount in the second bogie or the total number, the optimization solution has great advantages over the original working condition. The amount of accumulation snow in the braking device of the first bogie is reduced by 91.23%, and the amount of accumulation snow in the braking device of the second bogie is reduced by 77.09%, and the total amount is reduced by 89.94%.

It can be determined from the described simulation results that the mounting of the flow guide devices effectively improves the flow field characteristics of the region where the first bogie 3 located at the front end of the running direction of the train is located. Sufficiently guiding airflow downward makes a majority of high-velocity airflow entrained with snow particles flows out from the bottom of the first bogie 3, particularly in positions of some key components such as a motor, a gearbox and a braking device, the reduction of accumulation snow is particularly obvious. The airflow continues to flow backwards, and is blocked by vehicle bottom apparatuses, etc., and then is located at a low position, and when the airflow comes to the front of the second bogie 3, the speed is greatly reduced, so that the accumulation snow on the upper surface of the second bogie 3 is more completely reduced, and the amount of accumulation snow on the upper surface of the second bogie is substantially zero.

### Embodiment II:

This embodiment differs from Embodiment I in that: in this embodiment, the driving mechanisms are inflation mechanisms, the cylinders 11 in Embodiment I are replaced with inflation/deflation dual-purposed air pumps, one end of each inflation/deflation dual-purposed air pump is in communication with the air storage tank 12, or is directly connected to an air source on the vehicle, and the other end thereof is in communication with the cavity 9 in the flow guide device by an air pipe. The inflation/deflation dual-purposed air pumps are controlled by a controller, so as to achieve switching between an inflation operation and a deflation operation. In order to shorten the inflation and deflation time, a plurality of inflation/deflation dual-purposed air pumps can be mounted at the same time.

When the flow guide device needs to be extended and opened, the controller is used to control the inflation/deflation dual-purposed air pumps to start an inflation action, so as to inflate into the cavity 9 of the flow guide device; and along with the flowing of air, the first flow guide plate 5 can rotate downward around the fixed point at the top end, and at this time, the second flow guide plate 6 and the third flow guide plate 7 slide in a direction facing away from each other until extended, and the extending-retracting portions 8 are gradually extended, and by controlling the inflation time, the first flow guide plate 5 can be controlled to rotate to a preset angle.

When the flow guide device needs to be retracted and closed, the controller is used to control the inflation/deflation dual-purposed air pumps to start an air extraction operation, so as to extract air in the cavity 9 of the flow guide device; and along with the flowing out of air, the first flow guide plate 5 can rotate upward around the fixed point at the top end, and at this time, the second flow guide plate 6 and the third flow guide plate 7 slide in a direction facing each other until overlapped, and the extending-retracting portions 8 are gradually closed, and by controlling the extraction time, the first flow guide plate 5 can be controlled to rotate to a preset angle.

### Embodiment III:

Some embodiments of the present invention further provide a rail vehicle, including a plurality of carriages; two bogies 3 are mounted below each carriage, and the flow guide devices for a bogie as provided in Embodiment I are mounted at a front end and a rear end of each bogie 3 on a vehicle body chassis 1.

## Claims

1. A snow-accumulation-preventing and flow guide device for a bogie, comprising a driving mechanism, and a first flow guide plate (5), a second flow guide plate (6) and a third flow guide plate (7) which are sequentially connected in a length direction of a vehicle body; two sides of the first flow guide plate (5), of the second flow guide plate (6) and of the third flow guide plate (7) are connected by means of extending-retracting portions (8), a top sealing plate (21) is mounted on tops of the first flow guide plate (5) and the third flow guide plate (7), the first flow guide plate (5), the second flow guide plate (6), the third flow guide plate (7), the extending-retracting portions (8) at two sides and the top sealing plate (21) together enclose a sealed cavity, top ends of the first flow guide plate (5) and the third flow guide plate (7) are configured to be rotatable around fixed points, the fixed points are provided on the top sealing plate (21) or the vehicle body, a bottom end of the first flow guide plate (5) is rotatably connected to the second flow guide plate (6), the second flow guide plate (6) and the third flow guide plate (7) can be connected to each other in a telescopic and slidable manner, and the driving mechanism drives the first flow guide plate (5) and the second flow guide plate (6) and a third flow guide plate (7) to extend and open in a rail direction or retract and close in a direction of the vehicle body.

2. The snow-accumulation-preventing and flow guide device for a bogie as claimed in claim 1, wherein the flow guide device (2) is integrally mounted on a vehicle body chassis (1).

3. The snow-accumulation-preventing and flow guide device for a bogie as claimed in claim 1, wherein a bottom end of the first flow guide plate (5) is obliquely provided in a direction close to the bogie (3).

4. The snow-accumulation-preventing and flow guide device for a bogie as claimed in claim 3, wherein in an extended and open state of the first flow guide plate (5), an included angle α between the first flow guide plate (5) and a horizontal plane ranges from 30° to 80°.

5. The snow-accumulation-preventing and flow guide device for a bogie as claimed in claim 3, wherein in a retracted and closed state of the first flow guide plate (5), an included angle β between the first flow guide plate and a horizontal plane is less than or equal to 50°.

6. The snow-accumulation-preventing and flow guide device for a bogie as claimed in claim 1, wherein the second flow guide plate (6) and the third flow guide plate (7) are two parallel flat plates, and the second flow guide plate (6) and the third flow guide plate (7) are connected by means of multiple sliding pairs.

7. The snow-accumulation-preventing and flow guide device for a bogie as claimed in claim 1, wherein when the first flow guide plate (5) is in an extended and open state, a height from a lowest point of the first flow guide plate to a rail surface is 1/3 to 2/3 of a height of wheels (4).

8. The snow-accumulation-preventing and flow guide device for a bogie as claimed in claim 1, wherein a fixed point at the top end of the third flow guide plate (7) is provided at a position close to the bogie (3).

9. The snow-accumulation-preventing and flow guide device for a bogie as claimed in claim 1, wherein the driving mechanism is a cylinder-driving mechanism, a front end portion of the cylinder-driving mechanism is fixedly connected to the first flow guide plate (5), and the cylinder-driving mechanism drives the first flow guide plate (5) to rotate upward or downward, so as to achieve extension and opening or retraction and closing; or the driving mechanism is an inflation mechanism, and the inflation mechanism inflates or deflates the cavity (9), so as to achieve extension and opening or retraction and closing.

10. A rail vehicle, mounted with a plurality of bogies (3), wherein the snow-accumulation-preventing and flow guide devices for a bogie as claimed in any one of claims 1-9 are mounted at a vehicle body chassis (1) on a front end and a rear end of each bogie (3), two snow-accumulation-preventing and flow guide devices for a bogie are mounted symmetrically relative to a central axis of the bogie (3), the two snow-accumulation-preventing and flow guide devices for a bogie are configured such that when the snow-accumulation-preventing and flow guide device for a bogie mounted at a front part in a running direction of the vehicle is in an extended and open state, the snow-accumulation-preventing and flow guide device for a bogie away from the running direction of the vehicle is in a retracted and closed state.

## Patentansprüche

1. Schneeansammlungsverhindernde und Strömungsleitvorrichtung für ein Drehgestell, umfassend einen Antriebsmechanismus und ein erstes Strömungsleitblech (5), ein zweites Strömungsleitblech (6) und ein drittes Strömungsleitblech (7), die in einer Längsrichtung einer Fahrzeugkarosserie aufeinanderfolgend verbunden sind; wobei zwei Seiten des ersten Strömungsleitblechs (5), des zweiten Strömungsleitblechs (6) und des dritten Strömungsleitblechs (7) mittels ausfahr- und einziehbarer Abschnitte (8) verbunden sind, ein oberes Dichtungsblech (21) an den Oberseiten des ersten Strömungsleitblechs (5) und des dritten Strömungsleitblechs (7) montiert ist, das erste Strömungsleitblech (5), das zweite Strömungsleitblech (6), das dritte Strömungsleitblech (7), die ausfahr- und einziehbaren Abschnitte (8) an zwei Seiten und das obere Dichtungsblech (21) zusammen einen abgedichteten Hohlraum einschließen, obere Enden des ersten Strömungsleitblechs (5) und des dritten Strömungsleitblechs (7) so konfiguriert sind, dass sie um feste Punkte drehbar sind, die festen Punkte an dem oberen Dichtungsblech (21) oder der Fahrzeugkarosserie bereitgestellt sind, ein unteres Ende des ersten Strömungsleitblechs (5) drehbar mit dem zweiten Strömungsleitblech (6) verbunden ist, das zweite Strömungsleitblech (6) und das dritte Strömungsleitblech (7) in teleskopischer und verschiebbarer Weise miteinander verbunden werden können, und der Antriebsmechanismus das erste Strömungsleitblech (5) und das zweite Strömungsleitblech (6) und ein drittes Strömungsleitblech (7) zum Ausfahren und Öffnen in einer Schienenrichtung oder zum Einziehen und Schließen in einer Richtung der Fahrzeugkarosserie antreibt.

2. Schneeansammlungsverhindernde und Strömungsleitvorrichtung für ein Drehgestell nach Anspruch 1, wobei die Strömungsleitvorrichtung (2) einstückig an einem Fahrzeugkarosserie-Chassis (1) montiert ist.

3. Schneeansammlungsverhindernde und Strömungsleitvorrichtung für ein Drehgestell nach Anspruch 1, wobei ein unteres Ende des ersten Strömungsleitblechs (5) schräg in einer Richtung nahe dem Drehgestell (3) bereitgestellt ist.

4. Schneeansammlungsverhindernde und Strömungsleitvorrichtung für ein Drehgestell nach Anspruch 3, wobei in einem ausgefahrenen und offenen Zustand des ersten Strömungsleitblechs (5) ein beinhalteter Winkel α zwischen dem ersten Strömungsleitblech (5) und einer horizontalen Ebene von 30° bis 80° reicht.

5. Schneeansammlungsverhindernde und Strömungsleitvorrichtung für ein Drehgestell nach Anspruch 3, wobei in einem eingezogenen und geschlossenen Zustand des ersten Strömungsleitblechs (5) ein beinhalteter Winkel β zwischen dem ersten Strömungsleitblech und einer horizontalen Ebene weniger als oder gleich 50° beträgt.

6. Schneeansammlungsverhindernde und Strömungsleitvorrichtung für ein Drehgestell nach Anspruch 1, wobei das zweite Strömungsleitblech (6) und das dritte Strömungsleitblech (7) zwei parallele flache Bleche sind und das zweite Strömungsleitblech (6) und das dritte Strömungsleitblech (7) mittels mehrerer Gleitpaare verbunden sind.

7. Schneeansammlungsverhindernde und Strömungsleitvorrichtung für ein Drehgestell nach Anspruch 1, wobei, wenn das erste Strömungsleitblech (5) in einem ausgefahrenen und offenen Zustand ist, eine Höhe von einem niedrigsten Punkt des ersten Strömungsleitblechs zu einer Schienenoberfläche 1/3 bis 2/3 einer Höhe der Räder (4) beträgt.

8. Schneeansammlungsverhindernde und Strömungsleitvorrichtung für ein Drehgestell nach Anspruch 1, wobei ein fester Punkt an dem oberen Ende des dritten Strömungsleitblechs (7) in einer Position nahe dem Drehgestell (3) bereitgestellt ist.

9. Schneeansammlungsverhindernde und Strömungsleitvorrichtung für ein Drehgestell nach Anspruch 1, wobei der Antriebsmechanismus ein Zylinderantriebsmechanismus ist, ein vorderer Endabschnitt des Zylinderantriebsmechanismus fest mit dem ersten Strömungsleitblech (5) verbunden ist und der Zylinderantriebsmechanismus das erste Strömungsleitblech (5) antreibt, um sich nach oben oder unten zu drehen, um ein Ausfahren und Öffnen oder ein Einziehen und Schließen zu erreichen; oder der Antriebsmechanismus ein Aufblasmechanismus ist und der Aufblasmechanismus den Hohlraum (9) aufbläst oder entleert, um ein Ausfahren und Öffnen oder ein Einziehen und Schließen zu erreichen.

10. Schienenfahrzeug, das mit einer Vielzahl von Drehgestellen (3) montiert ist, wobei die schneeansammlungsverhindernden und Strömungsleitvorrichtungen für ein Drehgestell nach einem der Ansprüche 1 bis 9 an einer Fahrzeugkarosserie (1) an einem vorderen Ende und einem hinteren Ende eines jeden Drehgestells (3) montiert sind, wobei zwei schneeansammlungsverhindernde und Strömungsleitvorrichtungen für ein Drehgestell symmetrisch relativ zu einer Mittelachse des Drehgestells (3) montiert sind, die beiden schneeansammlungsverhindernden und Strömungsleitvorrichtungen für ein Drehgestell so konfiguriert sind, dass, wenn die schneeansammlungsverhindernde und Strömungsleitvorrichtung für ein Drehgestell, das an einem vorderen Teil in einer Fahrtrichtung des Fahrzeugs montiert ist, in einem ausgefahrenen und offenen Zustand ist, die schneeansammlungsverhindernde und Strömungsleitvorrichtung für ein Drehgestell, das von der Fahrtrichtung des Fahrzeugs entfernt ist, in einem eingezogenen und geschlossenen Zustand ist.

## Revendications

1. Dispositif de prévention de l'accumulation de neige et de guidage de l'écoulement pour un bogie, comprenant un mécanisme d'entraînement, et une première plaque de guidage de l'écoulement (5), une deuxième plaque de guidage de l'écoulement (6) et une troisième plaque de guidage de l'écoulement (7), lesquelles sont reliées consécutivement dans le sens de la longueur d'une carrosserie de véhicule ; les deux côtés de la première plaque de guidage de l'écoulement (5), de la deuxième plaque de guidage de l'écoulement (6) et de la troisième plaque de guidage de l'écoulement (7) sont reliés au moyen des parties d'extension-rétraction (8), une plaque d'étanchéité (21) supérieure est montée sur les sommets de la première plaque de guidage de l'écoulement (5) et de la troisième plaque de guidage de l'écoulement (7), la première plaque de guidage de l'écoulement (5), la deuxième plaque de guidage de l'écoulement (6), la troisième plaque de guidage de l'écoulement (7), les parties d'extension-rétraction (8) sur deux côtés et la plaque d'étanchéité (21) supérieure enferment ensemble une cavité scellée, les extrémités supérieures de la première plaque de guidage de l'écoulement (5) et de la troisième plaque de guidage de l'écoulement (7) sont conçues pour tourner autour des points fixes, les points fixes sont disposés sur la plaque d'étanchéité (21) supérieure ou sur la carrosserie de véhicule, une extrémité inférieure de la première plaque de guidage de l'écoulement (5) est reliée de manière rotative à la deuxième plaque de guidage de l'écoulement (6), la deuxième plaque de guidage de l'écoulement (6) et la troisième plaque de guidage de l'écoulement (7) peuvent être reliées l'une à l'autre de manière télescopique et coulissante, et le mécanisme d'entraînement entraîne la première plaque de guidage de l'écoulement (5) et la deuxième plaque de guidage de l'écoulement (6) et la troisième plaque de guidage de l'écoulement (7) destinées à s'étendre et à s'ouvrir dans le sens du rail ou à se rétracter et à se fermer dans le sens de la carrosserie de véhicule.

2. Dispositif de prévention de l'accumulation de neige et de guidage de l'écoulement pour un bogie selon la revendication 1, dans lequel le dispositif de guidage de l'écoulement (2) est monté monobloc sur un châssis (1) de la carrosserie de véhicule.

3. Dispositif de prévention de l'accumulation de neige et de guidage de l'écoulement pour un bogie selon la revendication 1, dans lequel une extrémité inférieure de la première plaque de guidage de l'écoulement (5) est située à l'oblique dans une direction proche du bogie (3).

4. Dispositif de prévention de l'accumulation de neige et de guidage de l'écoulement pour un bogie selon la revendication 3, dans lequel dans un état étendu et ouvert de la première plaque de guidage de l'écoulement (5), un angle inclus α entre la première plaque de guidage de l'écoulement (5) et un plan horizontal se situe dans une plage comprise entre 30° et 80°.

5. Dispositif de prévention de l'accumulation de neige et de guidage de l'écoulement pour un bogie selon la revendication 3, dans lequel dans un état rétracté et fermé de la première plaque de guidage de l'écoulement (5), un angle inclus β entre la première plaque de guidage de l'écoulement et le plan horizontal est inférieur ou égal à 50°.

6. Dispositif de prévention de l'accumulation de neige et de guidage de l'écoulement pour un bogie selon la revendication 1, dans lequel la deuxième plaque de guidage de l'écoulement (6) et la troisième plaque de guidage de l'écoulement (7) sont deux plaques plates parallèles, et la deuxième plaque de guidage de l'écoulement (6) et la troisième plaque de guidage de l'écoulement (7) sont reliées au moyen de multiples paires coulissantes.

7. Dispositif de prévention de l'accumulation de neige et de guidage de l'écoulement pour un bogie selon la revendication 1, dans lequel, lorsque la première plaque de guidage de l'écoulement (5) est dans un état étendu et ouvert, une hauteur d'un point inférieur de la première plaque de guidage de l'écoulement jusqu'à une surface de rail représente 1/3 à 2/3 de la hauteur des roues (4).

8. Dispositif de prévention de l'accumulation de neige et de guidage de l'écoulement pour un bogie selon la revendication 1, dans lequel un point fixe à l'extrémité supérieure de la troisième plaque de guidage de l'écoulement (7) est situé dans une position proche du bogie (3).

9. Dispositif de prévention de l'accumulation de neige et de guidage de l'écoulement pour un bogie selon la revendication 1, dans lequel le mécanisme d'entraînement est un mécanisme d'entraînement à cylindre, une partie d'extrémité avant du mécanisme d'entraînement à cylindre est reliée de manière fixe à la première plaque de guidage d'écoulement (5), et le mécanisme d'entraînement à cylindre entraîne la première plaque de guidage de l'écoulement (5) pour qu'elle tourne vers le haut ou vers le bas, de manière à obtenir une extension et une ouverture ou une rétraction et une fermeture ; ou le mécanisme d'entraînement est un mécanisme de gonflage, et le mécanisme de gonflage gonfle ou dégonfle la cavité (9), de manière à obtenir une extension et une ouverture ou une rétraction et une fermeture.

10. Véhicule ferroviaire, monté avec une pluralité de bogies (3), dans lequel les dispositifs de prévention de l'accumulation de neige et de guidage de l'écoulement pour un bogie selon l'une quelconque des revendications 1 à 9 sont montés au niveau d'un châssis (1) de la carrosserie de véhicule sur une extrémité avant et une extrémité arrière de chaque bogie (3), deux dispositifs de prévention de l'accumulation de neige et de guidage de l'écoulement pour un bogie sont montés symétriquement par rapport à un axe central du bogie (3), les deux dispositifs de prévention de l'accumulation de neige et de guidage de l'écoulement pour un bogie sont conçus de façon que, lorsque le dispositif de prévention de l'accumulation de neige et de guidage de l'écoulement pour un bogie monté au niveau d'une partie avant dans un sens de marche du véhicule est dans un état étendu et ouvert, le dispositif de prévention de l'accumulation de neige et de guidage de l'écoulement pour un bogie éloigné du sens de marche du véhicule soit dans un état rétracté et fermé.
